# EUROPEAN PATENT APPLICATION

(11) **EP 4 020 257 A1**
(43) Date of publication of application: **29.06.2022**
(21) Application number: 20216939.7
(22) Date of filing: 23.12.2020
(51) Int. Cl.: G06F 16/9032, G06N 5/00

(54) **COMPUTER IMPLEMENTED METHODS AND SYSTEMS FOR DECISIONMAKING**

(71) Applicant: BRAVEGOOSE LTD, Diss Norfolk IP22 4WR (GB)
(72) Inventor: The designation of the inventor has not yet been filed
(74) Representative: ip21 Ltd

(57) **Abstract**

A computer-implemented method for building a decision-making controller comprising a flow having a plurality of flow steps, the method comprising the steps of: providing one or more resources, the one or more resources having one or more selectable resource options, each one or more selectable resource option associated with a risk value; providing first and second flow steps of the plurality of flow steps, each step respectively comprising a resource from said one or more resources; providing a dependency function between the at least two flow steps, the dependency function being dependent on said selectable resource options for the resource comprised in the first step; and calculating an overall risk value for first and second flow steps using said risk values.

## Description

### Technical Field

Embodiments of the present invention generally relate to computer implemented systems and methods for building control units and decision-making mechanisms, some of which concern safety or efficiency decision making control units.

### Background

Safety and efficiency are of great significance to a variety of systems such as enterprises, resource management systems including energy and human resource (HR) management, and other industrial control systems. Such systems can be very complex, relying on control units or controllers to accurately process large amounts of data and adjust the operation of the system in a robust and effective manner. This is the case for controllers required by both human users and machine learning systems (i.e. for artificial intelligence units) for example.

Existing control units may make use of very complex decision making "trees" for example that would be impossible for a user to visualise and interact with on relatively small devices such as mobile phone screens. Accordingly, existing systems typically require large power hungry screens for direct access to the data visualisation or management interfaces, which can then often readily be corrupted by erroneous input.

Aspects of the invention seek to provide improved tools for decision making that address problems of the existing systems.

### Summary

According to a first independent aspect of the invention, there is provided a computer-implemented method for building a decision-making controller comprising a flow having a plurality of flow steps, the method comprising the steps of:
providing one or more resources, the one or more resources having one or more selectable resource options, each one or more selectable resource option associated with a risk value;
providing first and second flow steps of the plurality of flow steps, each step respectively comprising a resource from said one or more resources;
providing a dependency function between the at least two flow steps, the dependency function being dependent on said selectable resource options for the resource comprised in the first step; and
calculating an overall risk value for first and second flow steps using said risk values.

In a dependent aspect, the resource is one of the group of: a question, a resolution, and an outcome. Advantageously, risks may be mapped against options for question answers ("selectable resource option") for example. The steps are linked using the dependency function of the selectable resource options. An overall risk may be calculated for a flow, in use, for example, as a user traverses a flow, from the first step to the next step, depending on the selected resource options.

Advantageously, such built controllers represent automated solutions that can be applied to multi purpose data analysis and support systems in a variety of industrial and commercial applications. An outcome or a decision may represent a set of attributes that can be used to classify risks, score or rank data and information specific to the application domain. In other words, outcomes represent a resource that helps arrive at a decision in an effective manner.

In a dependent aspect, the controller comprises first and second flows, wherein the dependency function is between steps of the first and second flows, respectively. Advantageously, several flows may be linked in this manner.

A flow is also referred to as a "case" (that "flows" thanks to the built controller) and may contain a plurality of steps comprising a resource such as a question, resolution or outcome. The steps are advantageously organised into flows when building the controller. Questions may be multi-choice (i.e. having one or more answers or parameter values) or free text for example. Accordingly, a selectable resource option may be an answer to a question. Resolutions represent means to reduce an associated risk at the end of a question flow; for example advice that may be shown to users and are optionally actionable. Outcomes represent the end step or logical conclusion of a flow and may also link flows within complex flow "trees". For example, outcomes may be displayed at the end of a question flow ordered by which would produce the most risk.

In a flow, steps advantageously have dependencies (functions) on previous steps. That is a dependency function exists between the current and next step. When the process is employed for decision making, steps are thus only being presented to a user or machine learning (Al) system if they have actioned earlier steps in a certain way, for example when a specific answer to a question (resource) is given in the earlier steps. These dependencies are applied on steps with any combination of answer requirements allowing for a complex tree of case steps to be presented using relatively small devices for user interfaces.

Accordingly, it will be understood that dependency functions may exist between steps of the same flow or steps across the flows, that is, between a last step in the first flow (outcome step) and a first step of a second flow.

Accordingly, flows may be linked to another via an outcome step. For example, an outcome may be linked to (i.e. recommend) another set of steps. As a user or AI system traverses a case, when using the controller, a risk assessment may be built based on answers given to questions and actions that they have taken based on a resolution. When a user or system completes a case, results are provided which comprise ranked risks.

In a dependent aspect, the method further comprises the step of adjusting an individual risk value (for a selectable option) e.g. when the controller is in use, or adjusting the overall risk value. In a further dependent aspect, the risk value is adjustable using an adjustment mechanism, optionally a slider in a user interface. A plurality of risk values for each selectable resource option may thus be adjusted dynamically, in real time.

To increase flexibility and user interaction in real time, risks may be adjusted dynamically during the decision making process though additional control mechanisms such as sliders, either increasing or decreasing the specific risks.

In a dependent aspect, the method further comprises the steps of providing a template with a plurality of tokens, associating a token with one of said selectable resource options and providing a document using the template based on the selected resource options. This allows to automatically creating a user document from flow data. For example, smart fill document templates may be used with smart fill functions of a form.

In a dependent aspect, there is a provided a computer-implemented method for decision making using a decision making controller according to the first independent aspect.

According to a second independent aspect of the invention, there is provided a computer implemented system for building a decision-making controller, the system comprising a processor adapted to perform the steps of:
providing one or more resources, the one or more resources having one or more selectable resource options, each one or more selectable resource option associated with a risk value;
providing first and second flow steps of a plurality of flow steps, each step respectively comprising a resource from said one or more resources;
providing a dependency function between the at least two flow steps, the dependency function being dependent on said selectable resource options for the resource comprised in the first step; and
calculating an overall risk value for first and second flow steps using said risk values.

In a dependent aspect, a machine learning process comprises a method or system according to the aspects described above. It will be appreciated that the user input, e.g. a selectable resource option when using the system, may be an artificial intelligence system input. Accordingly, it will be understood that by a "user" it is meant a human user or an artificial intelligence system (including machine learning systems) accessing and interacting with the present systems. Embodiments of the present invention therefore represent improved tools for machine learning systems when being given the task of learning from a coaching case for example.

It will be appreciated that the described methods may be performed on any suitable processing system, including hardware or firmware. In some cases, each step may be performed by a module in a computer implemented system, such as a computer or smaller device such as a tablet or mobile phone.

Additionally or alternatively, any of the described methods may be embodied as instructions on a non-transitory computer-readable medium such that, when the instructions are executed by a suitable module within the system (such as a processor), cause the module to perform a described method.

In an envisaged application, aspects according to the invention are applied to human resource (HR) management systems. In such systems, the built controllers can classify and rank data specific to that domain, in an interactive, flexible, manner. In many organisations, particular large enterprises, decision making requires several inputs, often from more than one user. The safety and consistency of such decisions may vary according to human intention, knowledge and expertise. Embodiments of the present invention address this problem, whilst also providing efficient and flexible tools to address the general technical problems highlighted above.

Another envisaged application is in the area of energy resource management systems. Such systems may require for example classifying and ranking factors such as temperature, human activity, building capacity etc to create a model of the system. Embodiments of the present invention also allow for building control units that can address this problem in an optimum manner.

Accordingly, aspects of the invention provide tools to build and utilise optimum controllers that can handle complex data adjustments in an interactive, flexible manner. Moreover, such controllers may be implemented in a robust manner on small, energy efficient devices.

### Brief Description of the Drawings

Exemplary embodiments of the invention will now be described in reference to the accompanying drawings, in which:
Figure 1 shows a block diagram schematically illustrating functional elements according to an example of the invention;
Figure 2 is an example of a user interface to an admin module having controller building functions;
Figures 3A and 3B show examples of user interfaces for a Questions Form;
Figures 4A to 4G show examples of user interfaces for a Flow Form;
Figure 5 shows is a data flowchart of an example method for building a controller comprising a flow;
Figure 6 is an example table of inputs where the risks are mapped against a question's options;
Figures 7 and 8 are examples of a user interface for file editing management, with matching flows and smart fill functionalities.
Figure 9 shows is a data flowchart of an example decision making process using a controller comprising a plurality of flows ("flow tree").

### Detailed Description

The following example is used to illustrate the implementation of the present invention to a human resource (HR) system application.

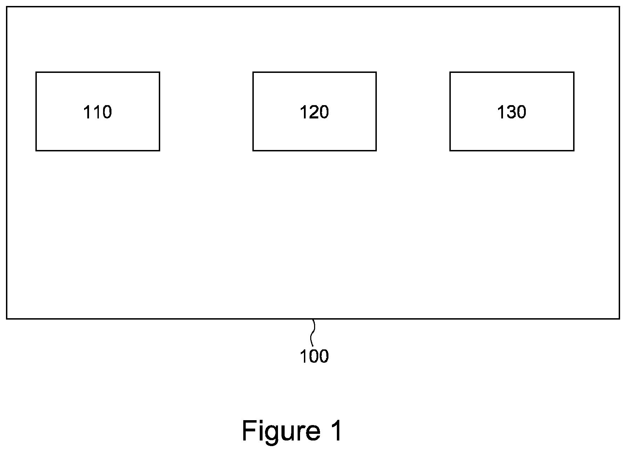

With reference to Figure 1, a computer implemented system 100 referred to as "CleverGoose" comprises a platform having a frontend (e.g. user interface), a processor, as well as internal and external databases (not shown). The platform comprises three modules: an admin module 110 where privileged (i.e. authorised) users can log in to manage all of the resources and provide inputs to build controller with complex decision flows, manage content and other users in the system; a user module 120 where authorised users can employ the controllers for example to take case coaching flows, download files and view their results; an anon module 130 which may have administrative functionality such as user sign in and user password management (e.g. in cases where a user has forgotten their password). The anon module 130 uses functions known in the art. Embodiments of the present invention are described in relation to the functionality of the first two modules 110, 120. It will be understood that by a "user" it is meant a human user or an artificial intelligence system (including machine learning systems) accessing and interacting with the present systems.

In the interest of clarity, it should be mentioned that some of the figures, Figure 1 included, are somewhat hybrid in that some of the shown entities in the figures represent more functional aspects of the system, whereas others are more representative of physical articles. It would be understood, however, that the scope of the invention is in no way compromised or obscured and indeed it is of benefit to understanding the invention that the figures are set out as they are.

### Admin Module 110

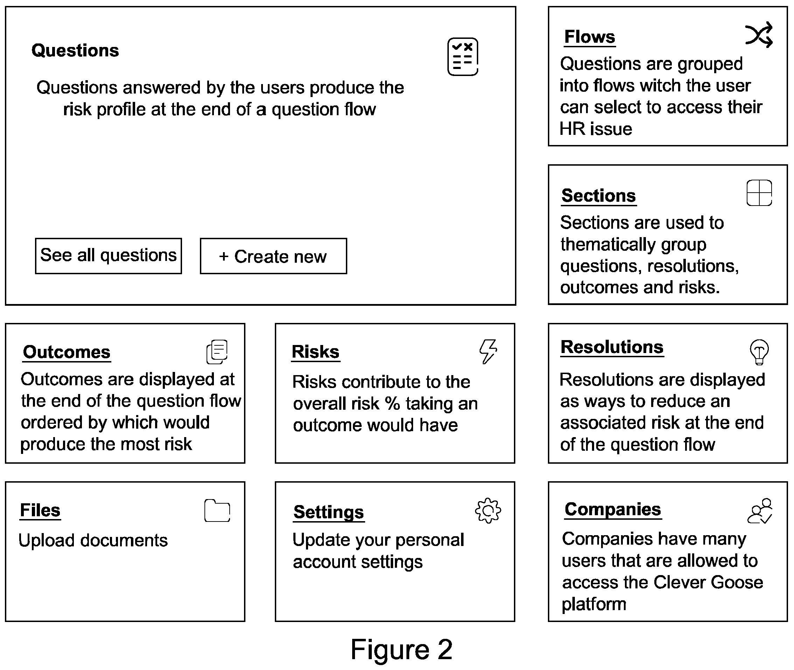

Figure 2 is an example of a user interface to an admin module 110 comprising controller building functionalities. Controller building functions in this example include: Questions, Flows, Sections, Outcomes, Risks, Resolutions, Files, Settings, and Companies. These functionalities are now described in turn.

### Questions

Questions represent resources or items that are used to build controllers by composing "flows". For example, questions may be presented to users who are using a case coaching flow in the present HR application, although it will be appreciated that questions may represent other resources such as energy sources instead of human resources.

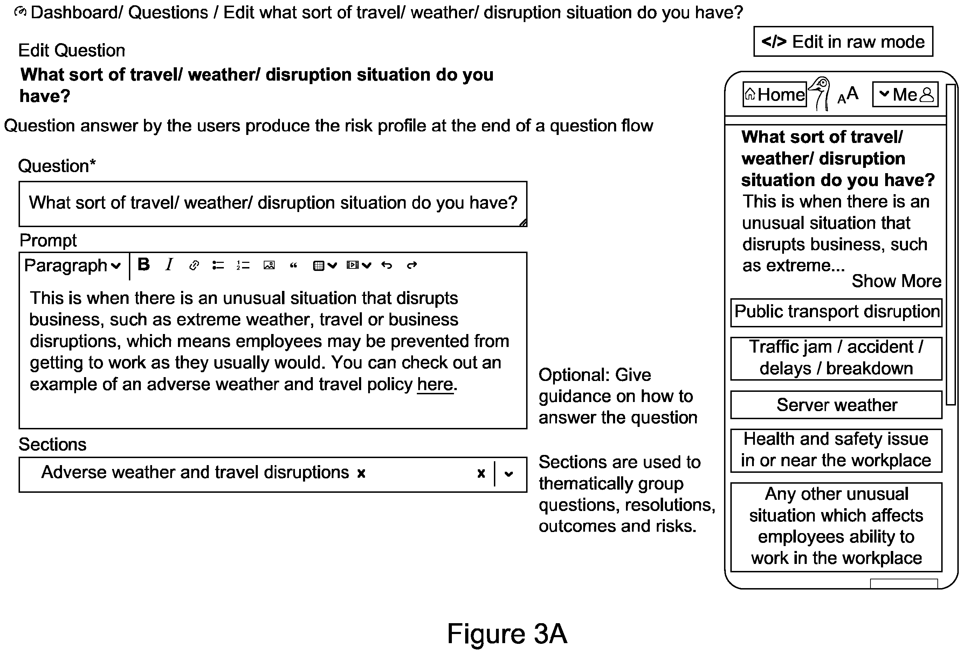

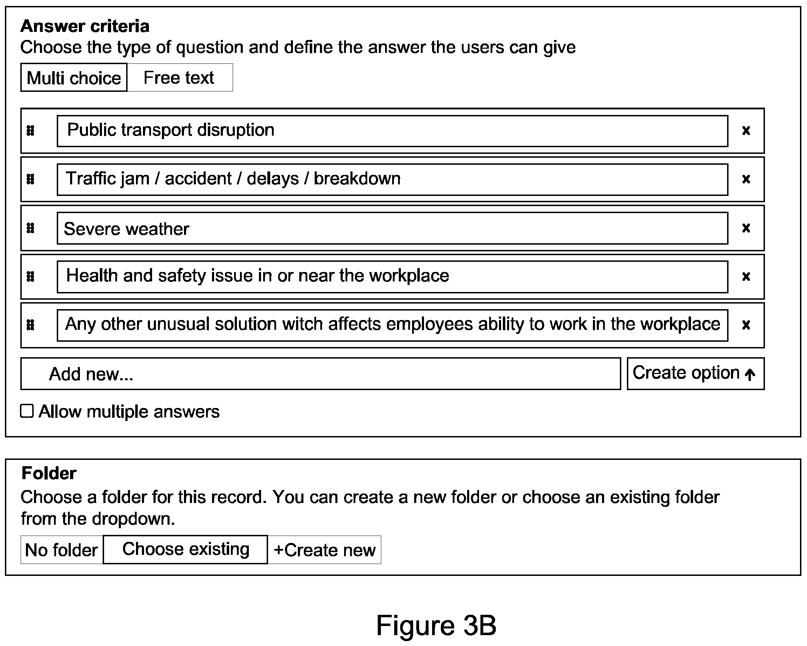

In the Questions user interface, a number of pages may be accessible to users including Index, New/Edit, Delete or Form pages. In the present example, the pages include:
- **Index page**
   - A folder view listing question folders and questions without a folder.
   - Admin users can, for example:
      - Search for specific questions.
      - Create a new folder for a question.
      - Edit a folder's name.
      - Click through to the new page for a question.
      - Click through to the edit page for a question.
      - Delete questions.
      - Delete question folders.
- **New/Edit page**
   - Both render the question form.
- **Delete page**
   - Seeks confirmation for committing to removing a question from the system.
- **Form**
   - With reference to Figures 3A and 3B, the question form in this example allows for admin users to:
      - Enter a name for a question.
      - Enter a prompt for the question (text that will be presented to users answering the question).
      - Choose a section for a question.
      - Choose a folder for a question.
      - Choose a question type.
         - Questions can either free text or a choice question with preset options.
      - Enter length validations for free text questions.
      - Enter options for choice questions:
         - Choice questions can be either multi/single choice where the user answer the question can select one or many options.

### Flows

Flows comprise steps used to arrive at a decision outcome in an effective manner.

Building such structures of flows (representing a controller) to arrive at a decision comprises building flows to group resources (such as questions, outcomes and resolutions) in an optimum manner. A plurality of flows may be arranged into groups which are more nuanced than a typical folder -> "child" relationship. Advantageously, a flow can represent a child of any number of flow groups and can be ordered differently in each flow group, to increase flexibility.

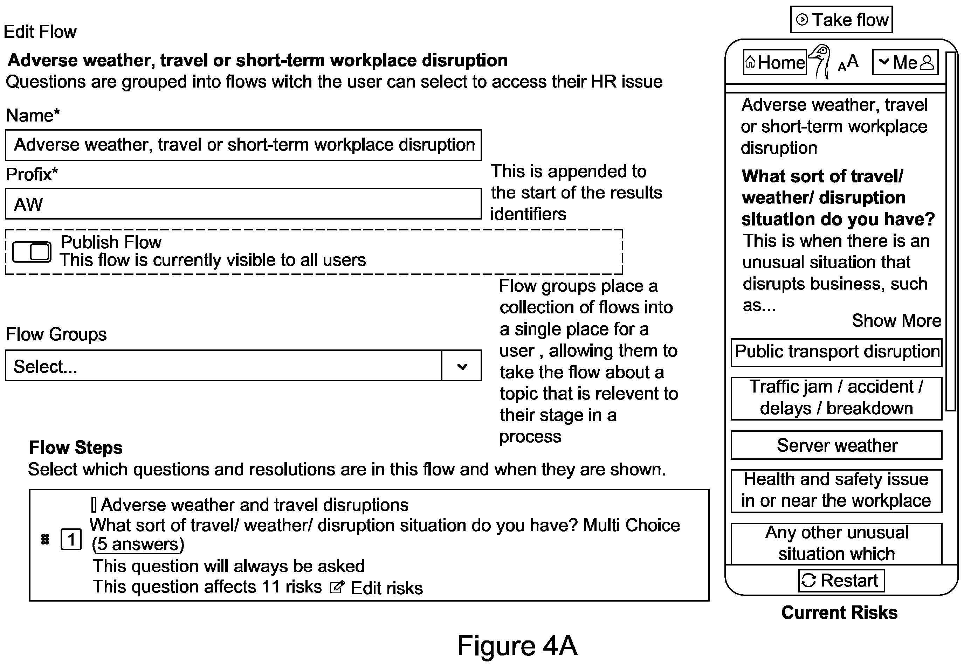

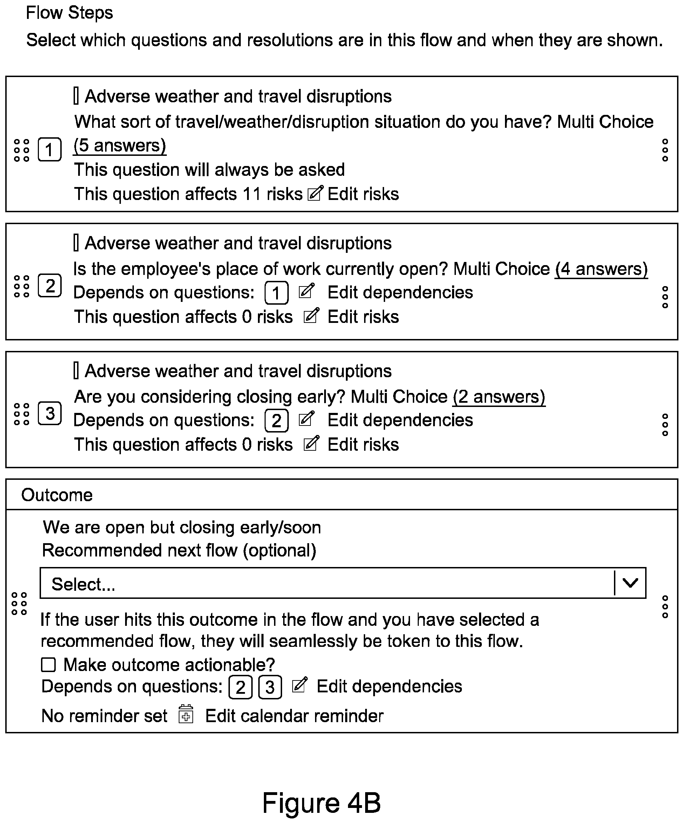

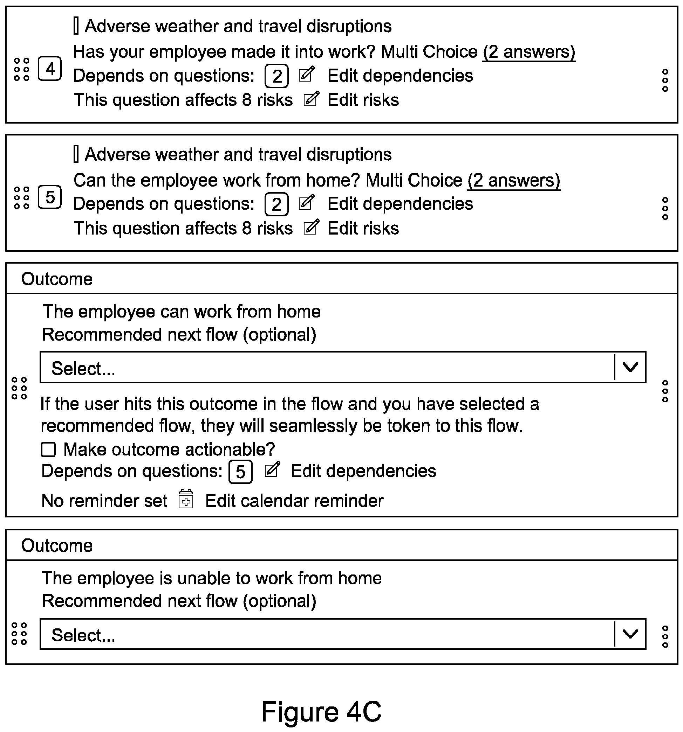

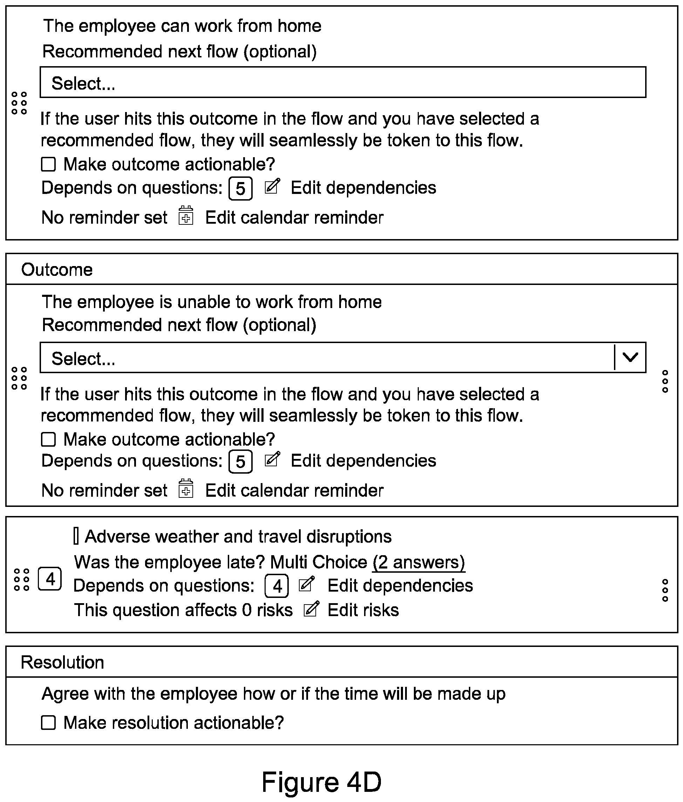

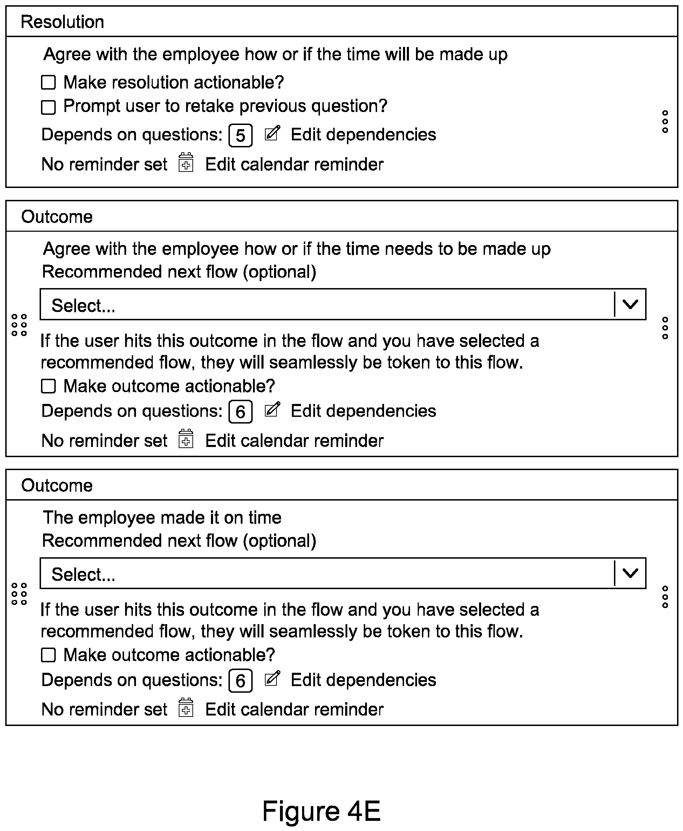

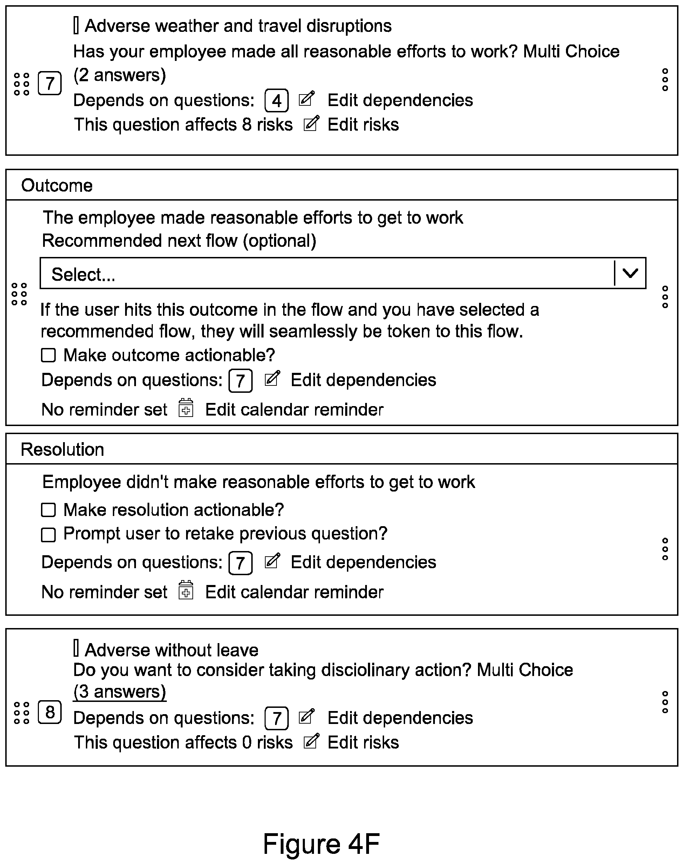

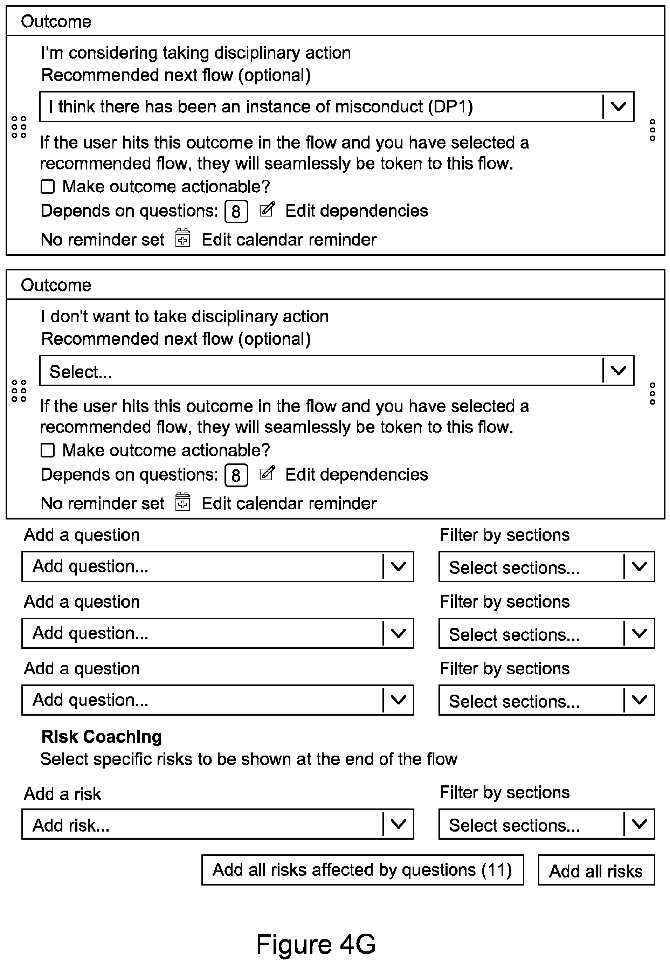

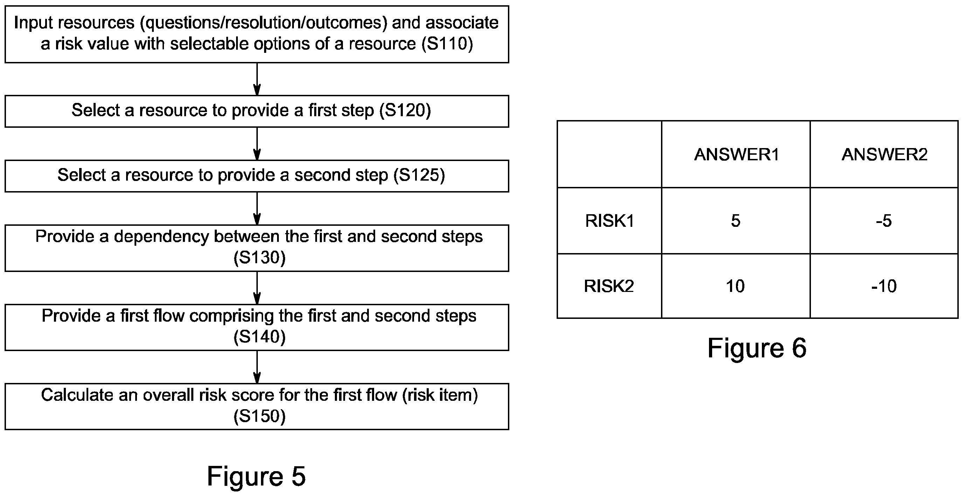

In the Flows user interface, a number of pages may be accessible to users including Index, New/Edit flow group, Flow group form, Delete flow group, New/Edit flow, Delete flow or Form pages. In the present example, the pages include:
- **Index page**
   - A folder view listing flow groups and flows not in a group.
   - Admin users can, for example:
      - Search for specific flows.
      - Click through to the new page for a flow.
      - Click through to the edit page for a flow.
      - Click through to the new page for a flow group.
      - Click through to the edit page for a flow group.
      - Click through to edit the intro flow.
      - Delete flows.
      - Delete flow groups.
- **New/Edit flow group page**
   - Renders the flow group form.
- **Flow group form**
   A form allows admin users to change the name of a flow group.
   - If the group has any flows, it will render, in this example, a drag and drop interface allowing the flows to be ordered for the group.
- **Delete flow group page**
   - Seeks confirmation for committing to removing a flow group from the system.
- **New/Edit flow page**
   - Both render the question form.
- **Delete flow page**
   - Seeks confirmation for committing to removing a flow from the system.
- **Form**
   - With reference to Figures 4A to 4G, and 5 the flow form allows to build complex, branching flows that represent a controller for automated decision making.
   - In this example, the flow form user interface allows for admin users to:
      - Enter a name for a flow.
      - Enter a prefix for a flow (used when generating identifiers for results records).
      - Flag the flow as published or not (this determines if it is shown to users).
      - With reference to Figure 5, a controller comprising a flow is built from flow steps which may form step "trees":
         - At step S110, input resources for providing steps can take the form of a question, a resolution or an outcome (i.e. a resource). One or more risk values may be associated with a resource.
         - In this example, admin users are presented with three lists to select questions/resolutions/outcomes, which may be saved in a database in the system (steps S120, S125).
         - Upon choosing a record, a question/resolution/outcome "card" is shown in this example.
         - The card allows for the admin user to enter a dependency (also referred to as a dependency function) and risk value or risk information.
         - At step S130, a dependency function (dependency) is provided between first and second steps. The dependencies allow for the step to be conditional on another step and create the flow (at step S140) i.e. the step will only be shown to users when they are taking the flow if they have answered previous question(s) a certain way. Thus, the dependency function has a parameter value that can represent an answer to a question.
            - For example, the following dependencies can be set up for:
               - Free text questions: do their previous answers contain/not contain the following substring.
               - Choices questions: did their previous answers include/not include the following answers.
         - The risk information advantageously allows for the steps to contribute an individual risk score to the overall risk (calculated at step S150) when the question has been answered a certain way or if they completed/not completed an actionable resolution/outcome.
            - **For a question,** any risks saved in a database of the system can be selected in this example. The admin user may be shown a table of inputs for example, where the risks are mapped against the question's answer options, as shown in the example of Figure 6. In other words, resources have one or more associated risk values.
            - This allows the admin users to specify how applicable a risk is based on an answer. If a user were to select ANSWER1, there would be values (scores) of 5 for RISK1 and 10 for RISK2, respectively. The risk values at each step may be summed for example to provide a total risk value for the flow, dependent on each answer.
            - **For resolutions/outcomes,** they can be flagged as 'actionable' and admin users may be shown, for example, a similar table as above except the only answers available are 'Yes' and 'No'. In this example admin user is provided a checkbox 'I have completed this step' when taking this flow and the true/false value of this checkbox is mapped to 'Yes'/'No'.
            - In this example, admin users also have the option inputting a 'total modifier' which may be, for example, a number added to the final risk score when computing the results.
         - Outcome steps can optionally have a 'next flow' specified. If a 'next flow' is saved to an outcome step, when a user is taking the flow and they meet this outcome, it will automatically put them onto the next flow.
         - For example, steps can be "drag and dropped" in the user interface to be reordered.
      - Build "risk items"
         - Risk items associate risks to the flow, and represent an overall risk for the flow. The risk item may be calculated from the individual risk values (at step S150).
         - The admin user can specify a base value which is how much initial risk score this risk has when computing results.
         - In preferred embodiments, admin users can also specify additional text to be shown on the results page.
      - A live preview based on the steps is rendered next to the form.

### Sections

Sections represent a resource that are used to group questions. In the Sections user interface, a number of pages may be accessible to users including Index, New/Edit, Delete or Form pages. In the present example, the pages may include:
- **Index page**
   - A table view listing all sections.
   - In this example, admin users can:
      - Search for specific section.
      - Click through to the new page for a section.
      - Click through to the edit page for a section.
      - Delete sections.
- **New/Edit page**
   - Both render the section form.
- **Delete page**
   - Seeks confirmation for committing to removing a section from the system.
- **Form**
   - In this example, the section form user interface allows for admin users to:
      - Enter a name for a section.
      - Choose a colour for the section.

### Outcomes

Outcomes are a resource that represent a final step of a flow. In other words, outcomes represent decisions that are outputs of the built controllers. In use, a flow ends or links to the next flow, when a step comprising an outcome is reached.

In the Outcomes user interface, a number of pages may be accessible to users including Index, New/Edit, Delete or Form pages. In the present example, the pages include:
- **Index page**
   - A folder view listing outcome folders and outcomes without a folder.
   - In this example, admin user can:
      - Search for specific outcomes.
      - Create a new folder for a outcome.
      - Edit a folder's name.
      - Click through to the new page for an outcome.
      - Click through to the edit page for an outcome.
      - Delete outcomes.
      - Delete outcome folders.
- **New/Edit page**
   - Both render the outcome form.
- **Delete page**
   - Seeks confirmation for committing to removing an outcome from the system.
- **Form**
   - In this example, the outcomes form allows for admin users to:
      - Enter a name for an outcome.
      - Enter a body of text for the outcome that will be displayed to users.
      - Choose a folder for the outcome.

### Risks

Risks may be used to represent an event that will happen (e.g. a likelihood of the occurrence) e.g. Manager Frustration' or 'Commercial Impact'. An individual risk score may be associated with a resource (e.g. a question/outcome/resolution). A plurality of risks may be associated with a resource that has selectable options. Risks may be ranked based in the accumulated risk value (score) from their answers to questions/outcomes/resolutions. As described above, total risks are calculated to represent; accordingly risk items may be built for a flow based on individual risk scores associated with the resource of each step.

In the Risks user interface, a number of pages may be accessible to users including Index, New/Edit, Delete or Form pages. In the present example, the pages include:
- **Index page**
   - A table view listing all risks.
   - In this example, admins users can:
      - Search for specific risk.
      - Click through to the new page for a risk.
      - Click through to the edit page for a risk.
      - Delete risks.
- **New/Edit page**
   - Both render the risk form.
- **Delete page**
   - Seeks confirmation for committing to removing a risk from the system.
- **Form**
   - In this example, the risk form user interface allows for admin users to:
      - Enter a name for a risk.
      - Enter a summary will be shown beneath the sliders on the results page.
      - Enter a body of text to be shown on the results page.

### Resolutions

Resolutions are another resource that may be used when composing flows to build the controller.

In the Resolutions user interface, a number of pages may be accessible to users including Index, New/Edit, Delete or Form pages. In the present example, the pages include:
- **Index page**
   - A folder view listing resolution folders and resolutions without a folder.
   - In this example, admin users can:
      - Search for specific resolutions.
      - Create a new folder for a resolution.
      - Edit a folder's name.
      - Click through to the new page for a resolution.
      - Click through to the edit page for a resolution.
      - Delete resolutions.
      - Delete resolution folders.
- **New/Edit page**
   - Both render the resolution form.
- **Delete page**
   - Seeks confirmation for committing to removing a resolution from the system.
- **Form**
   - In this example, the resolution form user interface allows for admin users to:
      - Enter a name for a resolution.
      - Enter a body for the resolution (text that will be presented to user's answer the question).
      - Choose a folder for a resolution.

### Companies

Companies represent groups of users, which may be human users or Al systems accessing the system. In the Companies user interface, a number of pages may be accessible to users including Index, New/Edit, Delete or Form pages. In the present example, the pages include:
- **Index page**
   - A table view listing companies.
   - In this example, admin users can:
      - Click through to the new page for a company.
      - Click through to the edit page for a company.
      - Delete companies.
- **New/Edit page**
   - Both render the company form.
- **Delete page**
   - Seeks confirmation for committing to removing a company from the system.
- **Form**
   - In this example, the company form user interface allows for admin users to:
      - Enter a name for the company.
      - Manage users for the company.
         - The admin user can create new users by entering a name and email and by optionally entering a password. If the admin does not opt to enter a password, an email will be sent out to the user asking them to accept the invite.
         - Admin users can also flag users as managers for the company.
            - A manager is able to see all case coaching results for a company and they can manage the users for the company as well.
         - Admin users can delete users from the company.

### Files

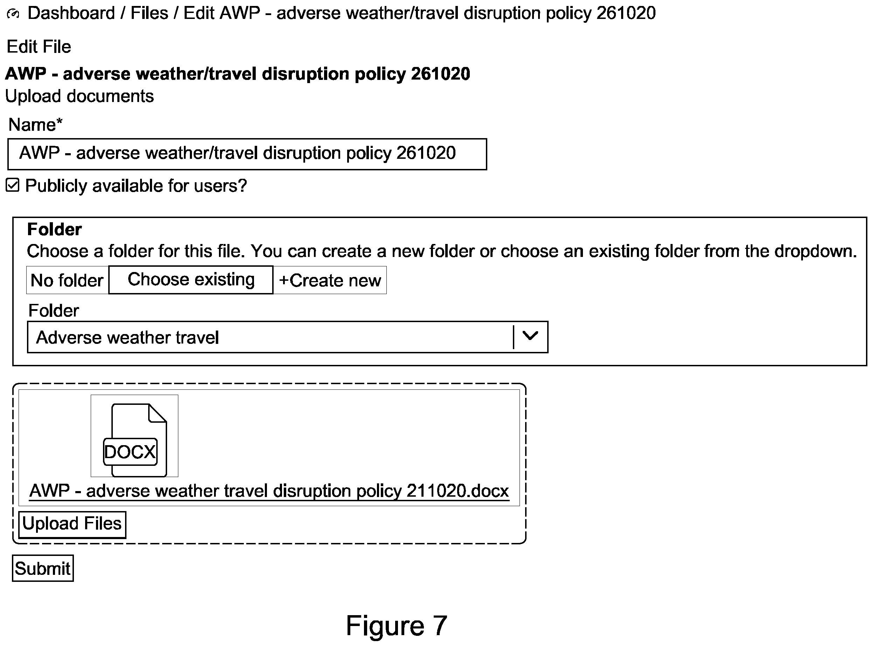

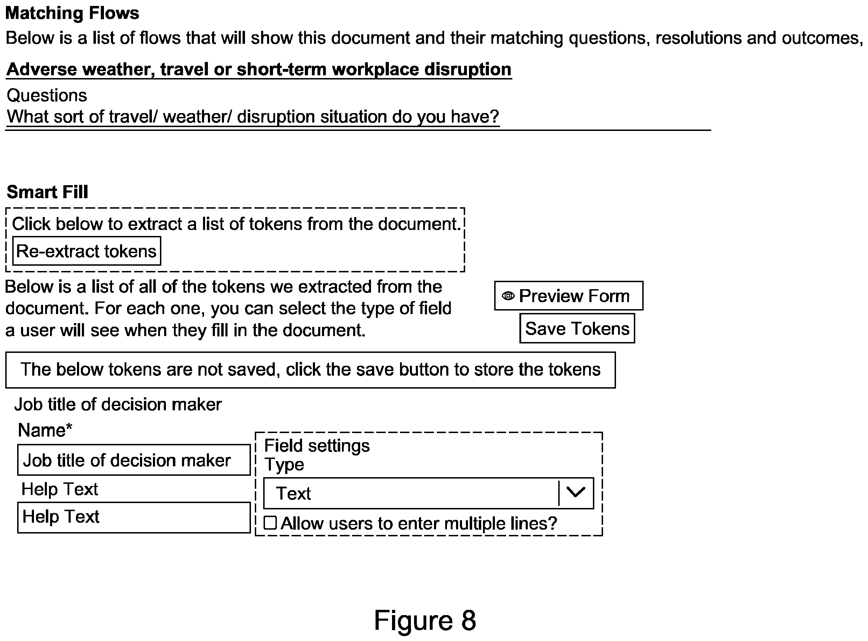

Files are records of uploaded files. In the Files user interface, a number of pages may be accessible to users including Index, New/Edit, Delete or Form pages. In the present example, the pages include:
- **Index page**
   - A folder view listing file folders and files without a folder.
   - In this example, admin users can:
      - Search for specific files.
      - Create a new folder for a file.
      - Edit a folder's name.
      - Click through to the new page for a file.
      - Click through to the edit page for a file.
      - Delete files.
      - Delete file folders.
- **New/Edit page**
   - Both render the file form.
- **Delete page**
   - Seeks confirmation for committing to removing a file from the system.
- **Form**
   - With reference to Figures 7 and 8, the file form user interface in this example allows for admin users to:
      - Enter a name for a file.
      - Upload an actual file (such as a word document and image).
      - Choose a folder for a file.
      - Select whether or not the file is public (it will be shown to users).
      - Enter 'Smart fill' data for the file.
         - 'Smart fill' represents a function that generates personalised files that can be downloaded from the system.
            - For example, when a user selects the option of downloading a file, they will enter data into a form and this will be automatically placed into a document template and they will download this personalised copy.
         - For example, if the admin user uploads a .docx file, they will have the option of extracting "tokens" from the document.
         - Tokens are words surrounded by square brackets like "[name]".
         - Each token from the document will be extracted and a list of fields will be rendered where the admin user can specify the type of field and help text. In this example, the following field types are available:
            - Text
            - Number
            - Date
            - Select list
            - Hidden (will not be present in the final document)
            - Same as another field (will not be shown to the user but will have its data filled from another field in the final document).
            - The schema entered may dictate the form the user is shown when they are personalising a file and downloading it with custom data.

### Feedback

Feedback may be left by users using the system. In this example, at the bottom of the user interface for the user module 110, there is a control mechanism, such as a thumbs up/thumbs down control function. A user can interact with this control mechanism and optionally enter a message to leave feedback.

In the Files user interface, a number of pages may be accessible to users including Index, Show and Delete pages. In the present example, the pages include:
- **Index page**
   - A table view listing feedback.
   - In this example, admin users can:
      - Click through to the show page for feedback.
      - Delete feedback.
- **Show page**
   - Lists the who the user is and their company, lists whether or not it is positive feedback and then any message left.
- **Delete page**

### Smart Fill Templates

In this example, smart fill templates are used in conjunction with the smart fill part of the files form. This allows admin users to enter a preset schema for a token such that when tokens are extracted from a document, if the token matches the name of a template, it will opt to default to use the template's schema.

In the Smart Fill Templates user interface example, a number of pages may be accessible to users including Index, New/Edit, Delete or Form pages. In the present example, the pages include:
- **Index page**
   - A table view listing templates.
   - In this example, admin users can:
      - Click through to the new page for templates.
      - Click through to the edit page for templates.
      - Delete templates.
- **New/edit page**
   - Both render the template form.
- **Form**
   - Renders an individual smart fill field which allows the admin to enter the name of the template which will match against extracted tokens, and then the schema for the field.
- **Delete page**

### Profile

Allows the admin users to edit their name, email address and password.

### Admin users

A list of users who have administrative privileges for the system.

### User Module 120

### Case coaching

In this example, controllers built in the with the admin module 110 may be used in an HR application for case coaching. Case coaching represents the decision making process where users (humans or Al systems) interact with a flow such as a question flow.

For example, users may initially be presented with a first flow which will ask them specific questions to try to narrow down the area of HR their issue relates to. If they reach an outcome in this flow, it will redirect them to the outcome's recommended second flow. Otherwise, if they fail to reach an outcome, they will be taken the case coaching index flow.

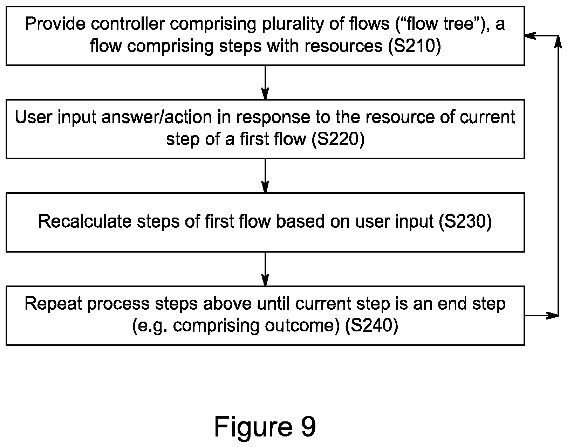

In the Case coaching user interface, a number of pages may be accessible to users including Index, Flow group, Taking a flow, pages. In the present example, the pages include:
- **Index page**
   - Lists all flow groups with published flows and published flows not in a flow group.
   - In this example, users can:
      - Click through to a flow group show page.
      - Click through to start taking a flow.
- **Flow group page**
   - Lists a flow group's constituent flows ordered by their weight for the flow.
   - In this example, users can:
      - Click through to start taking a flow.
- **Employing a flow (i.e. using a flow or interacting with a flow)**
   - With reference to the example of Figure 9, a controller is provided at step S21. The system may create a results record associated with the user and a first flow of the controller and the page will load then steps for the flow and compute the initial step tree (e.g. list of questions/resolutions/outcomes and their dependency data).
   - The first step presented to the user will be the first step of this tree.
   - On submitting their answer (step S220) and proceeding to the next step, the system may:
      - Recompute the step tree to account for new dependencies (step S230). E.g. if they answered 'yes' to the first question and another question down the line was configured from the admin form to only show if the user answered 'no', this will now be taken into account and the question will be removed from the tree and not shown to the user.
      - Update the results record with the latest answer.
   - For example, the user may be shown one of the following items for a step:
      - Question
         - Free text: user can type their answer.
         - Choices: user can click one or many answers.
      - Resolution
         - Shows the user the resolution body.
         - If the resolution was marked as actionable, will render a checkbox for have they completed it or not.
         - Allows the user configure a reminder about this step on the system, i.e. in a calendar for example.
            - They can enter a body of text about this step, specify a date when the reminder is due and save this and then optionally synchronise this to the other platforms.
      - Outcome
         - Shows the user the outcome body.
         - If the outcome was marked as actionable, will render a checkbox for have they completed it or not.
         - Allows the user configure a reminder about this step on the system, i.e. in a calendar for example.
            - They can enter a body of text about this step, specify a date when the reminder is due and save this and then optionally synchronise this to the other platforms.
   - If a step has body text and the body text has a link to a file in the admin module 110 and that file has smart fill data saved and the user clicks that link they will be shown a special modal that:
      - Lets the user download the raw file.
      - Lets the user enter data into form which will be automatically subbed into the document to download a personalised copy based on the smart fill data the admin configured.
      - For example:
         - Admin uploaded a document like "Dear [name]" and configured the smart field
         - User clicks to fill in the data
         - User enters their name as USERNAME
         - Users may download a new copy of the document with the data for name entered automatically like "Dear USERNAME"
   - In some cases, the user can go backwards in the flow to change answers to previous questions and upon doing so, the results and the step tree are updated automatically.
   - In this example, the flow ends if the user meets the end of a step tree or if they meet an outcome.
   - With reference to steps S240, if an outcome is reached and the outcome has a 'next flow' saved, they will be taken to this next flow.
      - The answers for this next flow will be saved on the same record so they will have one record comprising of answers for multiple flows.
   - Otherwise, the results record will be marked as complete and they will be taken to the results screen.

### Results

Results lists all attempts of the user's case coaching attempts. It may list both in progress and complete results.

In the Results user interface, a number of pages may be accessible to users including Index, and Show pages. In the present example, the pages include:
- **Index page**
   - Lists all of the user's results.
   - In this example, users can:
      - Click through to the results show page.
      - If results are still marked as in progress, they click to continue this.
- **Show page**
   - On visiting the results show page for the first time, an adjusting mechanism such as a slider may be employed where users can specify how much a certain risk applies to them (e.g. using a risk parameter value) from 'not at all' to 'very much' which dictates how much weight the risk has.
   - The results show page allows the user to:
      - Edit the name of the results record.
      - Download a pdf of the results record.
      - Select to continue the case coaching if they still have steps to complete.
      - Edit the risk sliders.
      - Enter some notes about the results.
   - The results page shows:
      - Risk profile
         - The risk profile lists all applicable risks sorted by risk score highest to lowest.
         - An applicable risk is classed a risk that has a derived risk score of greater than zero.
         - In this example, risk scores are computed in the following way:
            - For each question answered by the user and that the admin user entered risk meta information for from the flow admin form, map the answers to the numbers from the table input.
            - For each resolution/outcome that is marked as actionable and that the admin entered risk meta information for from the flow admin form, map their 'I have/have not completed this step' answer to the numbers from the table input.
            - If the flow associated to the results record has any risk items saved, it may add these base values to the total risk score from the steps.
            - If the user has then edited the risk sliders, the system may multiply each risk score by a figure between 0 - 2 based on the position of the slider so a user could potentially remove a risk entirely from their results if this was considered to be irrelevant.
         - For example:
            - From the flow form, the admin users entered the following risk meta for a question:
               - QUESTION1
                  - ANSWER1 increases RISK1 score by 5
                  - ANSWER2 increases RISK2 score by 1
            - If the user selected ANSWER1 for the question, the system calculates a final risk score of 5 for RISK1 and 0 for RISK2.
            - The user will only be shown RISK1 on the results page and it will be classed as their highest risk.
      - Answers and Resolutions
         - Lists all steps from the results for taking a case coaching flow.
         - Show their answers or if they completed an actionable step.
      - Case details
         - This includes for example basic information about the results and the type of case coaching taken such as:
            - Name of the flow.
            - A custom identifier for the results based on the prefix attribute of a flow.
            - Who took the flow.
            - When it was completed.

### Files

Lists all files in the system that admins have flagged as 'public'.

### Profile

Allows the user to edit their name, email address and password.

Users can also opt for example into automatically emailing themselves a copy of the results in .pdf format upon completion of a case coaching flow.

### Scheduled Actions

Any reminders that the users have saved while taking the flow.

### Feedback

In this example, a feedback mechanism is located at the bottom of each page are controls for leaving negative/positive feedback. Users have the option of leaving a message as well.

### Systems

It will be appreciated that the described methods may be performed on any suitable processing system, including hardware or firmware. In some cases, each step may be performed by a module in a system.

Additionally or alternatively, any of the described methods may be embodied as instructions on a non-transitory computer-readable medium such that, when the instructions are executed by a suitable module within the system (such as a processor), cause the module to perform a described method. In envisaged embodiment, it will be appreciated that any of the described methods may be performed by a computer or smaller, mobile devices such as a smart phone or tablet.

### Interpretation

It will be appreciated that the order of performance of the steps in any of the embodiments in the present description is not essential, unless required by context or otherwise specified. Thus most steps may be performed in any order. In addition, any of the embodiments may include more or fewer steps than those disclosed.

Additionally, it will be appreciated that the term "comprising" and its grammatical variants must be interpreted inclusively, unless the context requires otherwise. That is, "comprising" should be interpreted as meaning "including but not limited to".

Moreover, the invention has been described in terms of various specific embodiments. However, it will be appreciated that these are only examples which are used to illustrate the invention without limitation to those specific embodiments. Consequently, modifications can be made to the described embodiments without departing from the scope of the invention.

## Claims

1. A computer-implemented method for building a decision-making controller comprising a flow having a plurality of flow steps, the method comprising the steps of:
providing one or more resources, the one or more resources having one or more selectable resource options, respectively, each one or more selectable resource option associated with a risk value;
providing first and second flow steps of the plurality of flow steps, each step respectively comprising a resource from said one or more resources;
providing a dependency function between the at least two flow steps, the dependency function being dependent on said selectable resource options for the resource comprised in the first step; and
calculating an overall risk value for first and second flow steps using said risk values.

2. A computer-implemented method according to claim 1, wherein the resource is one of the group of: a question, a resolution, and an outcome.

3. A computer-implemented method according to claim 1 or claim 2, wherein the controller has first and second flows, wherein the dependency function is between steps of the first and second flows, respectively.

4. A computer-implemented method according to any preceding claim, the method further comprising the step of adjusting the risk value or the overall risk value.

5. A computer-implemented method according to any preceding claim, the method further comprising the steps of providing a template with a plurality of tokens, associating a token with one of said selectable resource options and providing a document using the template based on the selected resource options.

6. A computer-implemented method for decision making according to any preceding claim, using a decision making controller built using a method according to any preceding claim.

7. A computer implemented system for building a decision-making controller, the system comprising a processor adapted to perform the steps of:
providing one or more resources, the one or more resources having one or more selectable resource options, respectively, each one or more selectable resource option associated with a risk value;
providing first and second flow steps of a plurality of flow steps, each step respectively comprising a resource from said one or more resources;
providing a dependency function between the at least two flow steps, the dependency function being dependent on said selectable resource options for the resource comprised in the first step; and
calculating an overall risk value for first and second flow steps using said risk values.

8. A machine learning and artificial intelligence unit comprising a system according to claim 7.
